# EUROPÄISCHE PATENTSCHRIFT

(11) **EP 3 388 265 B1**
(45) Veröffentlichungstag und Bekanntmachung des Hinweises auf die Patenterteilung: **28.08.2019**
(21) Anmeldenummer: 18165467.4
(22) Anmeldetag: 03.04.2018
(51) Int. Cl.: B60H 1/34, B60H 1/32, F24F 13/14, F24F 13/15

(54) **LUFTAUSSTRÖMER MIT EINEM REIBELEMENT**
AIR DUCT WITH FRICTION COMPONENT
DIFFUSEUR À AIR POURVU D'UN ÉLÉMENT DE FRICTION

(30) Priorität: 06.04.2017 DE 202017102028 U
(43) Veröffentlichungstag der Anmeldung: 17.10.2018
(73) Patentinhaber: Dr. Schneider Kunststoffwerke GmbH, 96317 Kronach (DE)
(72) Erfinder: Kamm, Daniel, 96264 Altenkunstadt (DE); Hoehn, Pascal, 96450 Coburg (DE)

(56) Entgegenhaltungen:
- EP-A1- 0 925 983
- DE-U1-202008 008 882
- DE-U1-202011 050 819
- US-B1- 6 582 293

## Beschreibung

Es wird ein Luftausströmer mit mindestens einem Reibelement und mindestens einer Lamelle beschrieben, wobei die Lamelle in einem Luftkanal über Lagerzapfen verschwenkbar in einem Gehäuse des Luftausströmers gelagert ist. Reibelemente für Luftausströmer sind aus dem Stand der Technik in verschiedenen Ausführungen bekannt. Über Reibelemente soll erreicht werden, dass die Bedienkräfte beim Verschwenken von Lamellen über einen langen Zeitraum bei unterschiedlichen klimatischen Bedingungen im Wesentlichen gleich bleibt.

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft wird über eine Steuereinrichtung geregelt, die bspw. mit einer Bedieneinrichtung zum Verschwenken von Lamellen oder getrennt von einer solchen Bedieneinrichtung neben einer Ausströmöffnung angeordnet ist. Luftausströmer können in einem Fahrzeugarmaturenbrett oder im Bereich der A- oder B- Säule oder am Dach eines Kraftfahrzeuges angeordnet sein.

### Stand der Technik

Bei konventionellen Luftausströmern mit einer Vielzahl von Lamellen, die verschwenkbar in einem Gehäuse gelagert sind, liegen die Schulterflächen der Lamellen oftmals an den korrespondierenden Gehäusewänden an. Zwischen den Schulterflächen der Lamellen und den Gehäusewänden wird eine Reibung erzeugt, welche die Bedienkraft vorgibt. Die Bedienkräfte bleiben jedoch über den Benutzungszeitraum des Luftausströmers nicht konstant, da sich die Bedingungen an der Schnittstelle zwischen der Lamellenschulter und dem Gehäuse bzw. den Reibflächen ändern. Beispielsweise kommt es zu einem Abrieb und einem Verlust der Vorspannung. Zusätzlich kann es zu einem Abrieb mit Aufbau von zusätzlichen Materialanhäufungen kommen. Weiterhin kann es zu einer Veränderung der Oberflächenstruktur der Reibpartner kommen.

Die Reibpartner, Lamellenschulter und Gehäusewand, werden im Laufe der Zeit durch das ständige Aneinanderreiben beschädigt. Hierdurch kommt es zu einer Veränderung der Bedienkraft. Im Weiteren können bei einer Vielzahl von Lamellen die entsprechenden Reibpartner verschiedene Abriebe bereitstellen. Beispielsweise kann der Abrieb bei einer oberen Lamelle größer sein als bei einer unteren Lamelle. Bei gleicher Verspannung einer Koppelstange kann die Verspannung und somit die resultierende Normalkraft zur Mitte hin zunehmen. Das bedeutet, dass unter dieser Voraussetzung die mittleren Lamellen dem höchsten Verschleiß unterliegen. Diese Art der Verspannung ist üblich, jedoch nicht zwingend notwendig, so dass auch außenliegende Lamellen höherer Normalkraft ausgesetzt sein können.

Die herkömmlichen Materialpaarungen der Reibpartner sowie weitere Ausgestaltungen dieser Komponenten (z.B. Oberflächenrauigkeit, zueinander gewinkelte Reibflächen) an der Lagerstelle (Gehäusebohrung zu Lamellenzapfen) weisen sehr große Schwankungen des Drehmoments auf. Dies ist auf das Einlaufen der Oberflächen und auf Abrieb und Verlust der Vorspannkraft zurückzuführen.

In der Regel bestehen die Lamellen und das Gehäuse aus Kunststoff. Daher kommt es im Betrieb eines Luftausströmers häufig zu einem sehr starken Abrieb über die Benutzungszeit hinweg. Bedingt durch den Abtrieb unterliegt das Reibmoment nicht kalkulierbaren Änderungen und die Bedienkraft nimmt bspw. zu.

Aus dem Stand der Technik sind auch Einrichtungen bekannt, die beispielsweise bei einem größtmöglichen Spiel in einer Lagerungsaufnehmung oder Lagerbohrung eine gedämpfte Schwenkbewegung einer Lamelle realisieren. Eine solche Einrichtung ist beispielsweise aus DE 20 2008 008 882 U1 bekannt, die ein Lager für eine verschwenkbar gelagerte Lamelle offenbart, wobei mindestens ein Lagerzapfen einer Lamelle stirnseitig in einem Lager federnd abgestützt ist, wobei die Federanordnung mit einer Reibfläche an die Stirnfläche des Lagerzapfens bewegungsdämpfend anliegt. Die Federanordnung kann beispielsweise ein Dämpfungselement aus einem elastischen Kunststoff sein, der in die Lagerausnehmung oder die Durchgangsbohrung eingesetzt ist. Die Vorrichtung aus DE 20 2008 008 882 U1 benötigt daher zusätzliche Federanordnungen. Diese müssen in die einzelnen Lagerbohrungen eingesetzt werden. Bei einer Vielzahl von Lamellen bedeutet dies einen hohen Herstellungsaufwand sowie erhöhte Kosten.

Darüber hinaus kann der Lagerzapfen umfangseitig weiter an den Durchgangsbohrungen oder den Lagerausnehmungen reiben, was zu einem Abrieb und damit zu einer Veränderung der Bedienkräfte und einer Beschädigung der Lamellen und dem Gehäuse eines Luftausströmers führt.

### Aufgabe

Es ist daher Aufgabe einen Luftausströmer anzugeben, welcher ein Verschwenken mindestens einer Lamelle bei gleich bleibenden Reibmomenten und damit gleichbleibenden, definierbaren Bedienkräften bereitstellt. Darüber hinaus soll das Gehäuse des Luftausströmers sowie die Lamelle vor einem Abrieb und damit einer Beschädigung geschützt werden.

### Lösung

Die Aufgabe wird durch einen Luftausströmer mit mindestens einem Reibelement und mindestens einer Lamelle gelöst, welche in einem Luftkanal über Lagerzapfen verschwenkbar in einem Gehäuse gelagert ist, und wobei
- mindestens ein Lagerzapfen einen Reibkörper aufweist, der beabstandet zu einer Seitenwand des Gehäuses verläuft, über welche der Lagerzapfen verschwenkbar im Gehäuse gelagert ist, und
- das Reibelement derart im Gehäuse des Luftausströmers angeordnet ist, dass eine Reibfläche des Reibkörpers an einer Oberfläche des Reibelementes anliegt.

Die Einstellung einer definierten Bedienkraft erfolgt bei dem Luftausströmer ohne dass es zu einem Abrieb von Gehäusekomponenten des Luftausströmers kommt. Die Reibfläche des Reibelementes, welches mit der Lamelle über den Lagerzapfen verbunden ist, liegt an einer Oberfläche des Reibelementes an. Die Lagerzapfen der Lamelle dienen lediglich der Lagerung und sind keine Reibelemente. Die Umfangsfläche der Lagerzapfen unterliegt daher keiner Reibung. Es kommt deshalb zu keinem Abrieb im Bereich des Lagerzapfens und der Gehäuseaufnahmen.

Das Reibelement schütz deshalb das Gehäuse des Luftausströmers vollständig vor Abnutzung und Abrieb und gewährleistet damit ein konstantes Reibmoment. Zudem werden die Lamellen im Wesentlichen vor einem Abrieb geschützt, da eine Reibung lediglich über den Reibkörper erfolgt.

Das Reibelement und der Reibkörper können außerhalb des Luftkanals angeordnet sein. Der Luftkanal ist somit frei von Elementen, welche die Bedienkraft beim Verschwenken einstellen.

In weiteren Ausführungsformen kann das Reibelement in einem separaten Raum des Gehäuses des Luftausströmers angeordnet sein. Das Reibelement kann in diesem Raum derart gelagert sein, dass eine Verlagerung des Reibelementes nicht möglich ist. Das Reibelement weist damit eine feste Position in Bezug auf das Gehäuse des Luftausströmers auf. Zudem ist das Reibelement innerhalb des Gehäuses des Luftausströmers gelagert, sodass das Reibelement geschützt ist. Wird der Luftausströmer beispielsweise in ein Armaturenbrett eines Fahrzeugs eingebaut, wird sowohl beim Einbau des Luftausströmers als auch im Betrieb des Luftausströmers verhindert, dass weitere Komponenten des Armaturenbretts in Kontakt mit dem Reibelement kommen.

Der Reibkörper der mindestens einen Lamelle kann ebenfalls in dem separaten Raum des Gehäuses angeordnet sein. Der Reibkörper gelangt dabei ebenfalls nicht in Kontakt mit weiteren Komponenten, beispielsweise beim Einbau des Luftausströmers in ein Armaturenbrett oder im Betrieb des Luftausströmers innerhalb eines Armaturenbretts.

Sowohl das Reibelement als auch der mindestens eine Reibkörper der mindestens einen Lamelle sind bei einer Anordnung des Reibelementes in einem separaten Raum außerhalb des Luftkanals angeordnet, sodass keine Luftablenkung und Verwirbelung über den mindestens einen Reibkörper und das Reibelement erfolgen.

Die mindestens eine Lamelle ist zwar über die Lagerzapfen im Gehäuse des Luftausströmers gelagert, die Reibmomente zur Einstellung einer Bedienkraft beim Verschwenken werden aber im Wesentlichen nur über das Reibelement und den mindestens einen Reibkörper bereitgestellt.

In weiteren Ausführungsformen ist das Reibelement plattenförmig ausgebildet und erstreckt sich parallel zu einer Seitenwand des Gehäuses des Luftausströmers. Das Reibelement weist in diesen Ausführungen eine geringe Dicke auf. Daher ist auch der Luftausströmer in seiner Größe nur geringfügig erweitert als beispielsweise konventionelle Luftausströmer ohne ein solches Reibelement.

Der Luftausströmer kann ferner eine Vielzahl von Lamellen aufweisen, die parallel zueinander verschwenkbar im Gehäuse des Luftausströmers gelagert sind, wobei die Reibkörper der Lamellen wechselseitig an gegenüberliegenden Flächen des Reibelementes anliegen.

Im Stand der Technik wurde oftmals versucht, eine bestimmte Bedienkraft über die Reibmomente an einer Koppelstange bereitzustellen. Dabei liegen die Lamellenschultern an der Koppelstange an. Dies ist jedoch wie vorstehend beschrieben nachteilig, da es zu einem starken Abrieb der Lamellenschultern kommen kann. Dies führt wiederum zu einer Veränderung der Bedienkraft beim Verschwenken der Lamellen. Zudem kommt es zu einer Beschädigung von Komponenten des Luftausströmers. Die wechselseitige Anlage der Reibkörper an dem Reibelement schützt sowohl das Gehäuse des Luftausströmers vor einem Abrieb als auch die Lamellenschultern bzw. die Ablenkflächen der Lamellen für die Luftablenkung.

Die Reibkörper an den Lagerzapfen der Lamellen können gegenüberliegende Reibflächen aufweisen. Die Reibflächen erstrecken sich dabei parallel zu dem Reibelement.

Das Gehäuse des Luftausströmers bzw. das Fach, in welchem das Reibelement und die Reibkörper angeordnet sind, können weiter noch Halteelemente, Anlagevorsprünge sowie Schlitze aufweisen, die zur Lagerung des Reibelementes und der Reibkörper dienen. Beispielsweise stützen sich das Reibelement und die Reibkörper an Anlagenvorsprüngen ab. Ein Abstützen des Reibelementes und der Reibkörper stellt bei einem plattenförmigen Reibelement sicher, dass das Reibelement nicht verformt wird. Eine Verformung des Reibelementes könnte zu störenden Geräuschen und zu einem erhöhten Abrieb führen.

Die Reibfläche an dem Reibkörper der Lamellen kann in weiteren Ausführungsformen eine bogenförmige Form aufweisen. Der Reibkörper wird um die Lagerachse verschwenkt und führt dadurch eine Bewegung entlang einer Kreisbahn aus. Die bogenförmige Form entspricht im Wesentlichen der Bewegung der Reibfläche.

In weiteren Ausführungsformen kann die Reibfläche jedoch auch anderweitig ausgebildet sein.

Die Oberflächen des Reibelementes und die Reibfläche des Reibkörpers sind nicht abrasiv und/oder tribologisch optimiert ausgebildet. Hierzu werden bestimmte Materialpaarungen gewählt, damit es zu keinem oder nur einem geringen Abrieb kommt. Das Reibelement reduziert durch eine auf die Oberflächen der Reibflächen angepasste Oberflächengüte den Verschleiß beim Verschwenken entlang der Reibflächen der Reibkörper. Alle das Reibmoment beeinflussende Anlageflächen befinden sich dabei an nicht abrasiven Materialpaarungen.

In weiteren Ausführungsformen kann beispielsweise die Reibfläche über die mindestens eine Lamelle eine Beschichtung aus Polyoxymethylen, Polypropylen, Polyketon oder Poly(p-phenylenterephthalamid - PPTA) aufweisen oder aus Polyoxymethylen, Polypropylen, Polyketon, Poly(p-phenylenterephthalamid - PPTA) bestehen.

Ferner kann das Reibelement an mindestens einer Oberfläche eine Beschichtung aus Polyoxymethylen, Polypropylen, Polyketon, Poly(p-phenylenterephthalamid - PPTA) oder Stahl aufweisen oder aus Polyoxymethylen, Polypropylen, Polyketon, Poly(p-phenylenterephthalamid - PPTA) oder Stahl bestehen.

Die Auswahl der Materialpaarungen ist ein weiteres wesentliches Merkmal, welches eine zusätzliche Verbesserung bereitstellt. Durch die Auswahl der entsprechenden Materialien kann der Abrieb beim Verschwenken weiter reduziert werden. Wesentlich ist ebenso, dass der Reibpartner zur Einstellung einer Bedienkraft beim Verschwenken der Lamellen nicht durch eine Seitenwand des Gehäuses oder durch eine Koppelstange bereitgestellt wird, sondern durch ein zusätzliches Reibelement.

Das Reibelement kann beidseitig mit gleichbleibender Oberflächenqualität hergestellt werden, um bei einer wechselseitigen Anlage der Lamellen gleiche Bedingungen zu gewährleisten. Die Reibflächen am Reibelement können parallel, mit definierter Oberflächenqualität und unter definierter Gestaltung zu den reibrelevanten Reibflächen der Reibkörper der Lamellen ausgelegt werden.

### Kurzbeschreibung der Figuren

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Vorderansicht eines Luftausströmers mit einem Reibelement;
- Fig. 2: eine schematische Vorderansicht eines Gehäuses des Luftausströmers von Fig. 1;
- Fig. 3: eine schematische Darstellung einer Lamelle des Luftausströmers von Fig. 1;
- Fig. 4: eine schematische Darstellung des Reibelementes des Luftausströmers von Fig. 1;
- Fig. 5: eine schematische Darstellung des Reibelements, der Lamellen und einer Koppelstange des Luftausströmers von Fig. 1;
- Fig. 6: eine perspektivische Darstellung eines Ausschnitts des Luftausströmers von Fig. 1 mit dem Reibelement, den Lamellen und der Koppelstange;
- Fig. 7: eine perspektivische Darstellung eines Luftausströmers einer weiteren Ausführungsform;
- Fig. 8: eine perspektivische Darstellung eines Teils einer Lamelle des Luftausströmers von Fig. 7; und
- Fig. 9: eine Gegenüberstellung des Reibmomenten-Verlauf bei einem herkömmlichen Luftausströmer und einem Luftausströmer mit einem Reibelement der hierin beschriebenen technischen Lehre.

In den Zeichnungen mit gleichen Bezugszeichen versehene Komponenten entsprechen im Wesentlichen einander, sofern nichts anderes angegeben ist. Darüber hinaus wird darauf verzichtet Bestandteile zu beschreiben und zu zeigen, welche nicht wesentlich zum Verständnis der hierin offenbarten technischen Lehre sind.

### Ausführliche Beschreibung eines exemplarischen Ausführungsbeispiels

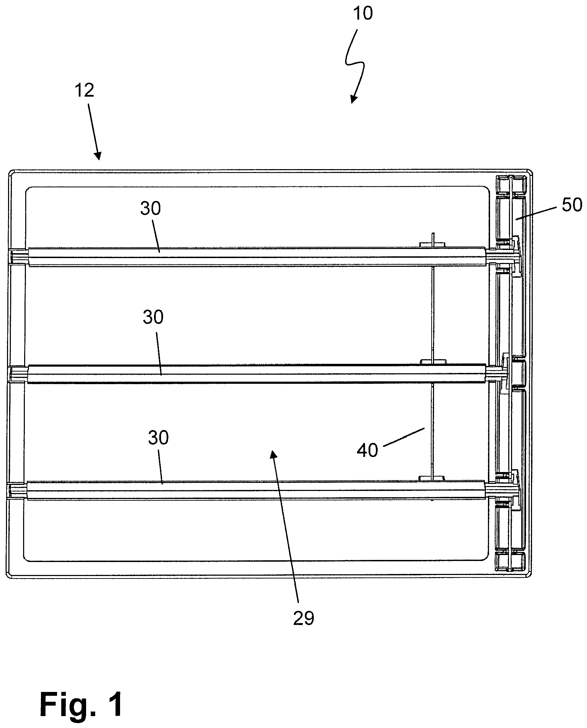

Fig. 1 zeigt eine Vorderansicht eines Luftausströmers 10 mit einem Reibelement 50. Der Luftausströmer 10 weist ein Gehäuse 12 auf. Das Gehäuse 12 kann in einem Fahrzeugarmaturenbrett eines Kraftfahrzeuges, wie beispielsweise eines PKWs eingesetzt werden und dient zur Bereitstellung von Luft in den Fahrgastraum. Der Luftausströmer 10 ist hierzu an seiner Rückseite mit einer Belüftungseinrichtung wie beispielsweise einer Klimaanlage verbunden. Zur Ausrichtung der ausströmenden Luft weist der Luftausströmer 10 Lamellen 30 auf, die im Gehäuse 12 im Luftkanal 29 des Luftausströmers 10 verschwenkbar gelagert sind.

Die Lamellen 30 sind über eine Koppelstange 40 miteinander verbunden, sodass das Verschwenken einer Lamelle gleichzeitig ein Verschwenken der anderen Lamellen 30 bewirkt. Zum Verschwenken der Lamellen 30 kann ein Bedienelement vorgesehen sein, welches in den Figuren nicht dargestellt ist.

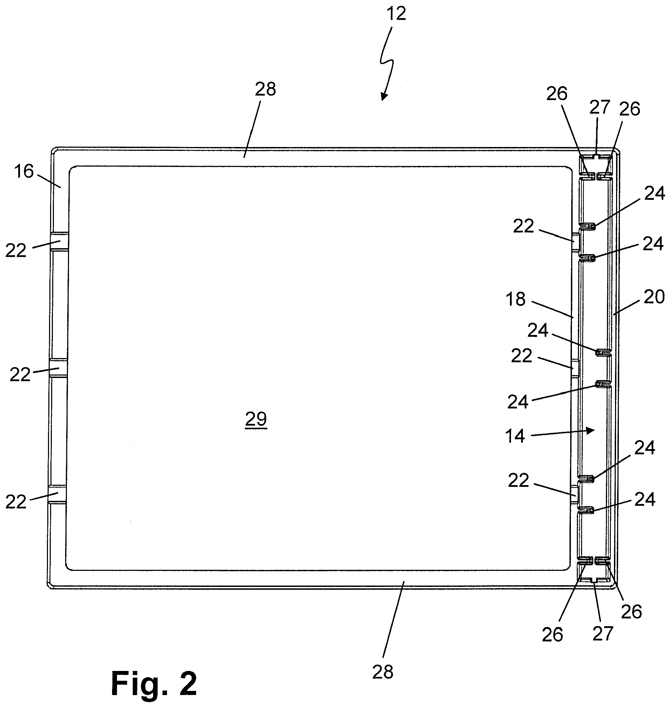

Fig. 2 zeigt eine schematische Vorderansicht des Gehäuses 12 des Luftausströmers 10 von Fig. 1. Das Gehäuse 12 weist zwei gegenüberliegende Wände 28 sowie gegenüberliegende Seitenwände 16, 18 und 20 auf. Die gegenüberliegenden Seitenwände 16 und 18 weisen Lageröffnungen 22 auf, in welchen Lagerzapfen 32 und 34 der Lamellen 30 gelagert sind. In den Lageröffnungen 22 der Seitenwand 16 sind die Lagerzapfen 32 der Lamellen 30 aufgenommen. In den Lageröffnungen 22 der Seitenwand 18 sind die Lagerzapfen 34 der Lamellen 30 gelagert. Die Lagerzapfen 32 und 34 sind verschwenkbar in den Lageröffnungen 22 gelagert.

Der Luftkanal 29, über den die Luft ausgegeben wird und in dem die Luftablenkung über die Lamellen 30 erfolgt, erstreckt sich zwischen den Wänden 28 sowie den gegenüberliegenden Seitenwänden 16 und 18.

Die Wände 28 erstrecken sich über die Seitenwand 18 hinaus bis zu einer weiteren Seitenwand 20. Zwischen den Seitenwänden 18 und 20 wird das Reibelement 50 aufgenommen. Zwischen den Seitenwänden 18 und 20 ist ein weiterer Raum 14 ausgebildet. Bei dieser Ausführungsform des Luftausströmers 10 mit dem zusätzlichen Raum 14 kann die Seitenwand 20 auch teilweise aufgebrochen ausgebildet sein, damit die Lageröffnungen 22 an der Seitenwand 18 in einem Werkzeug zur Herstellung des Gehäuses 12 nach außen gezogen werden können. In weiteren Ausführungsformen kann auch auf eine zusätzliche Seitenwand 20 verzichtet werden. Das Gehäuse 12 kann bspw. in einem Spritzgussverfahren hergestellt werden.

Der Raum 14 ist lediglich zur Aufnahme des Reibelementes 50 sowie von Reibkörpern 36 der Lamellen 30 vorgesehen. Zur sicheren Lagerung des Reibelementes 50 und zum Abstützen der Reibkörper 36 weisen die Seitenwände 18 und 20 Anlagevorsprünge 24 sowie Halteelemente 26 auf. Zwischen den Halteelementen 26 wird das Reibelement 50 gehalten. Zusätzlich befinden sich in den Verlängerungen der Wände 28 Schlitze 27, in welche das Reibelement 50 eingesetzt werden kann und zusätzlich gehalten wird. Im eingesetzten Zustand des Reibelementes 50 (siehe Fig. 1) liegt das Reibelement 50 auch an den Anlagevorsprüngen 24 an.

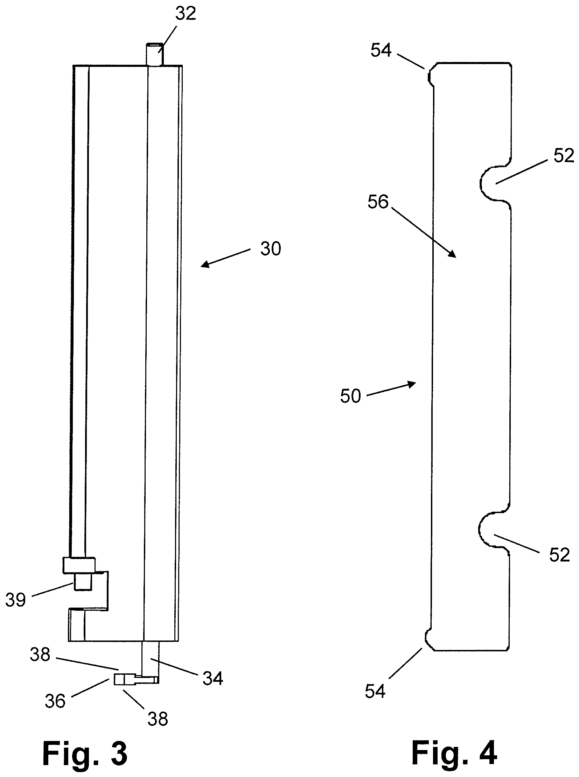

Fig. 3 zeigt eine schematische Darstellung einer Lamelle 30 des Luftausströmers 10 von Fig. 1. Die Lamelle 30 weist an gegenüberliegenden Seitenflächen im Bereich der Lamellenschultern Lagerzapfen 32 und 34 auf. Zusätzlich weist die Lamelle 30 einen rückseitigen Einschnitt auf, in dem ein Koppelzapfen 39 angeordnet ist. Der Koppelzapfen 39 ist in einer Öffnung 42 einer Koppelstange 40 aufgenommen und dient zum synchronen Verschwenken der Lamellen 30.

An dem Lagerzapfen 34 ist ein Reibkörper 36 angeordnet. Der Reibkörper 36 weist gegenüberliegende Reibflächen 38 auf. Die Reibflächen 38 können eine Beschichtung aus Polyoxymethylen, Polypropylen, Polyketon oder Poly(p-phenylenterephthalamid - PPTA) aufweisen oder aus Polyoxymethylen, Polypropylen, Polyketon oder Poly(p-phenylenterephthalamid - PPTA) bestehen. Die Reibflächen 38 sind nicht abrasiv ausgebildet.

Fig. 4 zeigt eine schematische Darstellung des Reibelementes 50 des Luftausströmers 10 von Fig. 1. Das Reibelement 50 weist eine plattenförmige Ausgestaltung auf. Dabei weist das Reibelement 50 eine relativ geringe Dicke (siehe Fig. 1) im Vergleich zu seiner Streckung parallel zu den Seitenwänden 18 und 20 auf.

Das Reibelement 50 weist rückwertige Abstandselemente 54 auf, die an einer in den Figuren nicht bezeichneten Rückwand des Fachs 14 anliegen. Im Bereich der Abstandselemente 54 wird das Reibelement 50 in die Schlitze 27 eingesetzt und eingeschoben. Das Reibelement 50 weist zusätzlich Öffnungen 52 auf. Die Öffnungen 52 sind nach vorne in Richtung der Luftaustrittsöffnung des Luftausströmers 10 gerichtet. Die Öffnungen 52 dienen zum Durchführen von Lagerzapfen 34 der Lamellen 30. Die Oberfläche 56 des Reibelementes 50 zu beiden Seiten kann eine Beschichtung aus Polyoxymethylen, Polypropylen, Polyketon, Poly(p-phenylenterephthalamid - PPTA) oder Stahl aufweisen oder das Reibelement besteht aus Polyoxymethylen, Polypropylen, Polyketon, Poly(p-phenylenterephthalamid - PPTA) oder Stahl. Vorzugsweise ist das Reibelement 50 aus einem der vorstehend genannten Materialien gefertigt.

Die gegenüberliegenden Oberflächen 56 des Reibelementes 50 oder das Reibelement 50 selbst weisen dabei eine nicht abrasive Oberfläche 56 auf. Im Zusammenspiel mit den Reibflächen 38, welche ebenso nicht abrasiv ausgebildet sind, wird eine nicht abrasive Materialpaarung bereitgestellt. Beim Verstellen der Lamellen 30 kommt es daher nur zu einem sehr geringen Abrieb. Hierdurch wird ein Abfall oder Anstieg der Bedienkräfte beim Verschwenken der Lamellen 30 über einen langen Zeitraum ausgeschlossen bzw. auf ein Minimum reduziert.

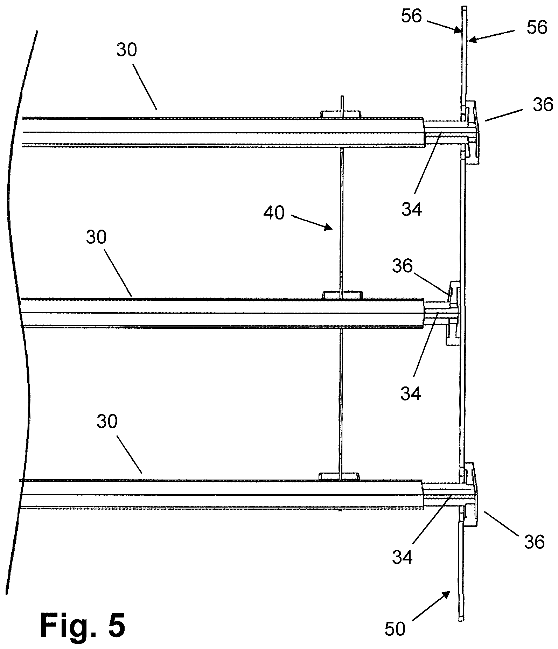

Fig. 5 zeigt eine schematische Darstellung des Reibelements 50, der Lamellen 30 und einer Koppelstange 40 des Luftausströmers 10 von Fig. 1 ohne Gehäuse 12. Die Reibkörper 36 der Lamellen 30 liegen wechselseitig mit ihren Reibflächen 38 an den Oberflächen 56 des Reibelementes 50 an. Die jeweils an der anderen Seite anliegenden Anlagevorsprünge 24 der Seitenwände 18 und 20 stützen das Reibelement 50.

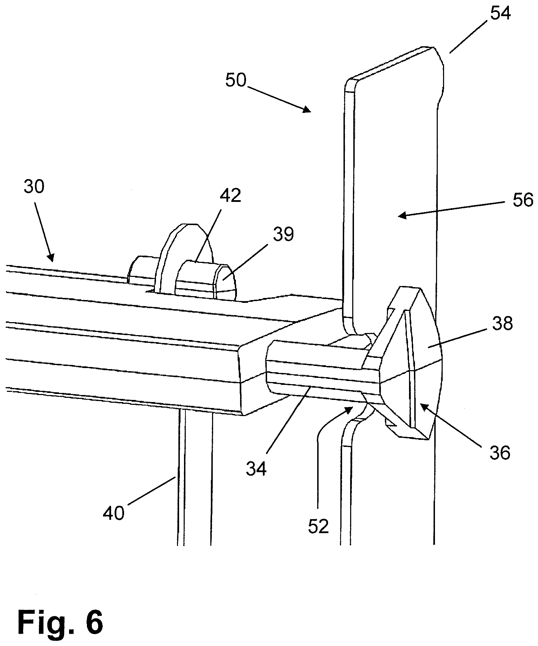

Fig. 6 zeigt eine perspektivische Darstellung eines Ausschnitts des Luftausströmers 10 von Fig. 1 mit dem Reibelement 50, den Lamellen 30 und der Koppelstange 40 ohne das Gehäuse 12.

Der Reibkörper 36 ist an dem Lagerzapfen 34 angeordnet und weist im Wesentlichen die Form eines Kreissektors auf. Die Reibflächen 38 erstrecken sich über einen vorderen Bereich des Reibkörpers 36. Es kann ausreichend sein, lediglich die Reibflächen 38 entsprechend so zu beschichten oder auszubilden, dass diese eine nicht abrasive Oberfläche aufweisen. Die Form der Reibflächen 38 kann verschiedenartig gewählt werden. Da jedoch ein Verschwenken der Reibkörper 36 und damit eine Bewegung der Reibflächen 38 im Wesentlichen in Form einer Kreisbahn erfolgt, kann das vorteilhaft sein, die Reibflächen 38 zumindest bogenförmig auszubilden.

Das Reibelement 50 oder zumindest die Oberflächen 56 des Reibelementes 50 bestehen aus einem nicht abrasiven Material oder weisen eine solche Beschichtung auf. Die Oberflächen 56 des Reibelementes 50 können auch tribologisch optimiert ausgeführt sein. Vorzugsweise besteht das Reibelement 50 aus Stahl. Die Oberflächen 56 des aus Stahl bestehenden Reibelementes 50 können zusätzlich so bearbeitet sein, dass die Oberflächen 56 nicht abrasiv sind. Liegen die Reibflächen 38 an den Oberflächen 56 des aus Stahl bestehenden Reibelements 50 an, so erfolgt beim Verschwenken der Lamellen 30 nur ein geringer Abrieb. Bei herkömmlichen Materialpaarungen aus dem Stand der Technik, wobei Lamellenschultern an Gehäusewänden eines Gehäuses des Luftausströmers anliegen, kommt es zu einem starken Abrieb. Dies hat beispielsweise zur Folge, dass die Bedienkräfte über den Benutzungszeitraum des Luftausströmers hinweg sich stark verändern. Zusätzlich kann dies zu einer Beschädigung führen, welche den Luftausströmer derart beschädigt, dass dieser ausgetauscht werden muss.

Bei der hierin beschriebenen technischen Lehre ist dies nicht möglich, da der Abrieb auf ein Minimum reduziert ist. Zusätzlich treten keine Reibmomente zwischen den Lamellen 30 und dem Gehäuse 12 auf. Die Reibung wird lediglich im Bereich der Oberflächen 56 des Reibelementes 50 und der Reibflächen 38 der Reibkörper 36 erzeugt.

Die Lagerzapfen 34 und 32 der Lamellen 30 können insbesondere mit einem Spiel in den Lageröffnungen 32 aufgenommen sein.

Die Auswahl der richtigen Materialien für die Reibpartner - Reibelement 50 und Reibkörper 36 bzw. die Reibflächen 38 der Reibkörper 36 - unterstützen die Reduzierung des Abriebs beim Verschwenken der Lamellen 30 auf ein Minimum. Zusätzlich ist es vorteilhaft, dass die Reibpartner nicht in den Luftkanal 29 ragen. Eine Ablenkung der Luft, die durch den Luftkanal 29 strömt, in unbeabsichtigter Weise wird zusätzlich ausgeschlossen. Ferner kommt es zu keiner Beschädigung der Seitenwände 16 und 18 aufgrund eines Abriebs, was zu einer zusätzlichen Luftablenkung führen kann, wenn beispielsweise Rillen gebildet werden.

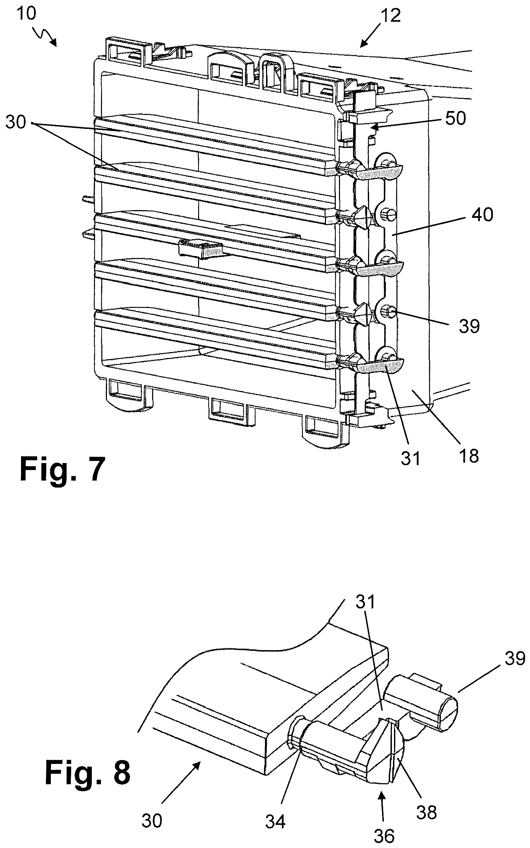

Fig. 7 zeigt eine perspektivische Darstellung eines Luftausströmers 10 einer weiteren Ausführungsform. Der Unterschied zu dem Luftausströmer 10 der vorstehenden Ausführungsform liegt darin, dass die Koppelstange 40 wie das Reibelement 50 außerhalb eines Gehäuses 12 liegt. Hierzu weisen die Lamellen 30 einen Verbindungsabschnitt 31 auf, der sich radial von Lagerzapfen 34 erstreckt und mit einem parallel zum Lagerzapfen 34 sich erstreckenden Koppelzapfen 39 verbunden ist. Die Koppelzapfen 39 sind in Öffnungen 42 der Koppelstange 40 aufgenommen.

Fig. 8 zeigt eine perspektivische Darstellung eines Teils einer Lamelle 30 des Luftausströmers 10 von Fig. 7. Wie Fig. 7 entnommen werden kann, sind die Lamellen 30 so ausgebildet, dass diese wechselseitig an der Koppelstange 40 anliegen. Ferner liegen die Reibkörper 36 der Lamellen 30 wechselseitig über ihre entsprechenden Reibflächen 38 an dem Reibelement 50 an. Daher ist nur ein Teil der Lamellen 30 genau so ausgebildet, wie in Fig. 8 dargestellt. Die Ausbildung der restlichen Lamellen 30 ergibt sich in analoger Weise.

Die Ausführung gemäß den Fig. 7 und 8 bietet einerseits einen Luftausströmer 10 mit einem optisch ansprechenden Erscheinungsbild, da keine störenden Komponenten sichtbar sind. Darüber hinaus wird der Luftstrom durch den Luftkanal 29 des Luftausströmer 10 nicht durch eine Koppelstange 40 und die dafür erforderlichen Komponenten an der Lamelle 30 gestört. Weiterhin ergibt sich dabei auch ein Lamellenpaket, umfassend die Lamellen 30, welches einer Missbrauchskraft entgegenwirkt. Bei dem sogenannten "Bleistifttest" wird ein Stift zwischen die Lamellen 30 gesteckt und bewegt. Oftmals kommt es dann zu einem "Aushängen" mindestens einer Lamelle 30. Geschieht dies bspw. in einem Fahrzeug muss der Luftausströmer 10 ausgebaut, zerlegt und repariert oder gar ausgetauscht werden. Über die Kopplung der Lamellen 30 durch die Koppelstange 40 außerhalb des Gehäuses 12, zusätzlich zur Kopplung der Lamellen 30 über das Reibelement 50 außerhalb des Gehäuses 12, wird ein wesentlich steiferes Lamellenpaket bereitgestellt, wobei ein "Aushängen" von Lamellen 30 deutlich erschwert ist.

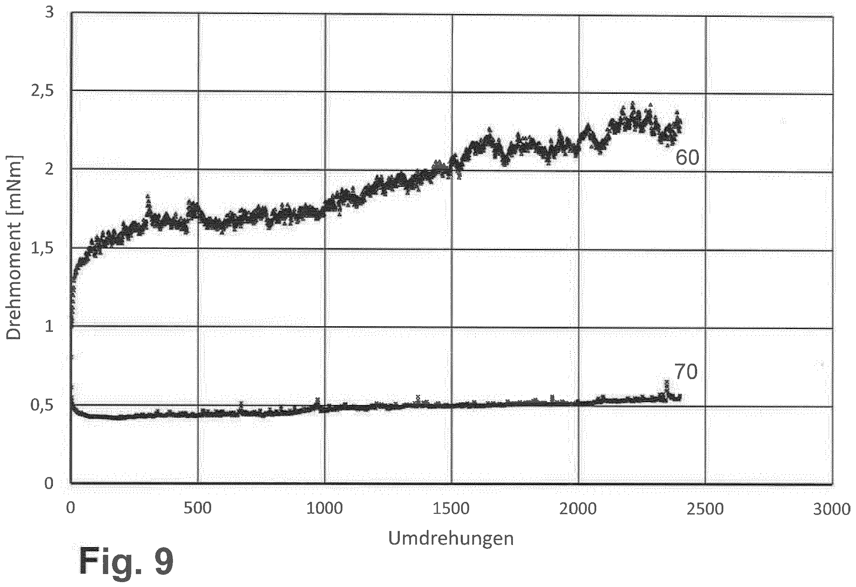

Fig. 9 zeigt schließlich noch eine Gegenüberstellung des Reibmomenten-Verlauf bei einem herkömmlichen Luftausströmer und einem Luftausströmer 10 mit einem Reibelement 50 der hierin beschriebenen technischen Lehre.

Es wurde eine Vergleichsmessung durchgeführt, wobei das Reibmoment gemessen wurde, welches bei einer herkömmlichen Krafterzeugung durch eine Lagerung der Lamellenschulter an einem Gehäuse auftritt. Die Messwerte sind im Verlauf 60 wiedergegeben. Zudem wurde das Reibmoment gemessen, welches bei einer alternativen Krafterzeugung durch Lagerung der Reibkörper 36 an dem Reibelement 50 auftritt. Diese Messwerte sind im Verlauf 70 wiedergegeben.

Die Luftausströmer weisen im Wesentlichen die gleichen Abmaße auf. Die Lamellen 30 und die Lamellen des Luftausströmers der konventionellen Ausführung weisen im Wesentlichen die gleiche Länge und Dicke auf, wobei die Lamellen 30 über die Reibköper 36 außerhalb des Luftkanals 29 an dem Reibelement 50 anliegen, und die Lamellen der konventionellen Ausführung über ihre Lamellenschultern im Luftkanal an den gegenüberliegenden Gehäusewänden des Luftausströmers anliegen.

An der x-Achse sind die Umdrehungen wiedergegeben und die y-Achse gibt das Drehmoment in mNm wieder. Ein Vergleich macht deutlich, dass das Drehmoment bei dem Verlauf 70 über einen langen Benutzungszeitraum von bspw. 2500 Umdrehungen kaum eine Veränderung zu dem Drehmoment bei Beginn der Messreihe erfährt.

Bei dem Verlauf 60 einer herkömmlichen Lagerung zeigt sich ein ganz anderer Verlauf. Kurz nach Beginn der Messreihe steigt das Reibmoment stetig an. Ein Einpendeln auf einen Bereich lässt sich ebenfalls nicht erkennen.

Zudem liegt das Reibmoment bei einem Luftausströmer 10 mit einer alternativen Lagerung durch das Reibelement 50 auf einem geringeren Niveau als bei einer herkömmlichen Lagerung. Auch dies ist positiv zu bewerten, da sich eine im Wesentlichen konstante Bedienkraft über einen langen Zeitraum auch bei relativ geringen Reibmomenten realisieren lässt.

### Bezugszeichenliste

- 10: Luftausströmer
- 12: Gehäuse
- 14: Raum
- 16: Seitenwand
- 18: Seitenwand
- 20: Seitenwand
- 22: Lageröffnung
- 24: Anlagevorsprung
- 26: Halteelement
- 27: Schlitz
- 28: Wand
- 29: Luftkanal
- 30: Lamelle
- 31: Verbindungsabschnitt
- 32: Lagerzapfen
- 34: Lagerzapfen
- 36: Reibkörper
- 38: Reibfläche
- 39: Koppelzapfen
- 40: Koppelstange
- 42: Öffnung
- 50: Reibelement
- 52: Öffnung
- 54: Abstandselement
- 56: Oberfläche
- 60: Verlauf
- 70: Verlauf

## Patentansprüche

1. Luftausströmer mit mindestens einem Reibelement (50) und mindestens einer Lamelle (30), die in einem Luftkanal (29) über Lagerzapfen (32, 34) verschwenkbar in einem Gehäuse (12) gelagert ist, und wobei
- mindestens ein Lagerzapfen (34) einen Reibkörper (36) aufweist, und
- das Reibelement (50) derart im Gehäuse (12) des Luftausströmers (10) angeordnet ist, dass eine Reibfläche (38) des Reibkörpers (36) an einer Oberfläche (56) des Reibelements (50) anliegt,
**dadurch gekennzeichnet, dass** der Reibkörper (36) beabstandet zu einer Seitenwand (18) des Gehäuses (12) verläuft, über welche der Lagerzapfen (34) verschwenkbar im Gehäuse (12) gelagert ist.

2. Luftausströmer nach Anspruch 1, wobei das Reibelement (50) und der Reibkörper (36) außerhalb des Luftkanals (29) angeordnet sind.

3. Luftausströmer nach Anspruch 2, wobei das Reibelement (50) in einem separatem Raum (14) des Gehäuses (12) des Luftausströmers (10) angeordnet ist.

4. Luftausströmer nach einem der Ansprüche 1 bis 3, wobei das Reibelement (50) plattenförmig ausgebildet ist und sich parallel zu einer Seitenwand (16; 18, 20) des Gehäuses (12) des Luftausströmers (10) erstreckt.

5. Luftausströmer nach einem der Ansprüche 1 bis 4, aufweisend eine Vielzahl von Lamellen (30), die parallel zu einander verschwenkbar im Gehäuse (12) des Luftausströmers (10) gelagert sind, wobei die Reibkörper (36) der Lamellen (30) wechselseitig an gegenüberliegenden Oberflächen (56) des Reibelements (50) anliegen.

6. Luftausströmer nach Anspruch 5, wobei die Reibköper (36) an den Lagerzapfen (34) der Lamellen (30) gegenüberliegende Reibflächen (38) aufweisen.

7. Luftausströmer nach einem der Ansprüche 1 bis 6, wobei die Reibfläche (38) eine bogenförmige Form aufweist.

8. Luftausströmer nach einem der Ansprüche 1 bis 7, wobei die Oberflächen (56) des Reibelementes (50) und die Reibfläche (38) des Reibkörpers (36) nicht abrasiv und/oder tribologisch optimiert ausgebildet sind.

9. Luftausströmer nach einem der Ansprüche 1 bis 8, wobei die Reibfläche (38) oder die mindestens eine Lamelle (30) eine Beschichtung aus Polyoxymethylen, Polypropylen, Polyketon oder Poly(p-phenylenterephthalamid) aufweist oder aus Polyoxymethylen, Polypropylen, Polyketon oder Poly(p-phenylenterephthalamid) besteht.

10. Luftausströmer nach einem der Ansprüche 1 bis 9, wobei das Reibelement (50) an mindestens einer Oberfläche (56) eine Beschichtung aus Polyoxymethylen, Polypropylen, Polyketon, Poly(p-phenylenterephthalamid) oder Stahl aufweist oder aus Polyoxymethylen, Polypropylen, Polyketon, Poly(p-phenylenterephthalamid) oder Stahl besteht.

## Claims

1. Air vent with at least one friction element (50) and at least one slat (30), which is mounted in an air channel (29) in a housing (12) by way of bearing pins (32, 34) to be pivotable and wherein
- at least one bearing pin (34) has a friction body (36) and
- the friction element (50) is so arranged in a housing (12) of the air vent (10) that a friction surface (38) of the friction body (36) bears against a surface (56) of the friction element (50),
**characterised in that** the friction body (36) extends at a spacing from a side wall (18), by way of which the bearing pin (34) is pivotably mounted in the housing (12), of the housing (12).

2. Air vent according to claim 1, wherein the friction element (50) and the friction body (36) are arranged outside the air channel (29).

3. Air vent according to claim 2, wherein the friction element (50) is arranged in a separate space (14) of the housing (12) of the air vent (10).

4. Air vent according to any one of claims 1 to 3, wherein the friction element (50) is of plate-shaped construction and extends parallel to a side wall (16; 18, 20) of the housing (12) of the air vent (10).

5. Air vent according to any one of claims 1 to 4, comprising a plurality of slats (30) which are mounted parallel to one another in the housing (12) of the air vent (10) to be pivotable, wherein the friction bodies (36) of the slats (30) bear in alternation against opposite surfaces (56) of the friction element (50).

6. Air vent according to claim 5, wherein the friction bodies (36) at the bearing pins (34) of the slats (30) have opposite friction surfaces (38).

7. Air vent according to any one of claims 1 to 6, wherein the friction surface (38) has a curved shape.

8. Air vent according to any one of claims 1 to 7, wherein the surfaces (56) of the friction body (50) and the friction surface (38) of the friction body (36) are constructed to be non-abrasive and/or tribologically optimised.

9. Air vent according to any one of claims 1 to 8, wherein the friction surface (38) or the at least one slat (30) has a coating of polyoxymethylene, polypropylene, polyketone or poly (p-phenyleneterephthalamide) or consists of polyoxymethylene, polypropylene, polyketone or poly (p-phenyleneterephthalamide).

10. Air vent according to any one of claims 1 to 9, wherein the friction element (50) has a coating of polyoxymethylene, polypropylene, polyketone or poly (p-phenyleneterephthalamide) or steel at at least one surface (56) or consists of polyoxymethylene, polypropylene, polyketone or poly (p-phenyleneterephthalamide) or steel.

## Revendications

1. Diffuseur à air avec au moins un élément de friction (50) et au moins une lamelle (30) qui est logée de manière pivotante dans un boîtier (12) dans un canal d'air (29) par des tourillons (32, 34), et dans lequel
- au moins un tourillon (34) présente un corps de friction (36), et
- l'élément de friction (50) est agencé dans le boîtier (12) du diffuseur à air (10) de telle manière qu'une surface de friction (38) du corps de friction (36) repose contre une surface (56) de l'élément de friction (50),
**caractérisé en ce que** le corps de friction (36) s'étend à distance d'une paroi latérale (18) du boîtier (12), par le biais de laquelle le tourillon (34) est logé de manière pivotante dans le boîtier (12).

2. Diffuseur à air selon la revendication 1, dans lequel l'élément de friction (50) et le corps de friction (36) sont agencés en dehors du canal d'air (29).

3. Diffuseur à air selon la revendication 2, dans lequel l'élément de friction (50) est agencé dans un espace séparé (14) du boîtier (12) du diffuseur à air (10).

4. Diffuseur à air selon l'une quelconque des revendications 1 à 3, dans lequel l'élément de friction (50) est réalisé en forme de plaque et s'étend parallèlement à une paroi latérale (16 ; 18, 20) du boîtier (12) du diffuseur à air (10).

5. Diffuseur à air selon l'une quelconque des revendications 1 à 4, présentant une pluralité de lamelles (30) qui sont logées parallèlement les unes aux autres de manière pivotante dans le boîtier (12) du diffuseur à air (10), dans lequel les corps de friction (36) des lamelles (30) reposent réciproquement contre des surfaces opposées (56) de l'élément de friction (50).

6. Diffuseur à air selon la revendication 5, dans lequel les corps de friction (36) présentent, au niveau des tourillons (34) des lamelles (30), des surfaces de friction (38) opposées.

7. Diffuseur à air selon l'une quelconque des revendications 1 à 6, dans lequel la surface de friction (38) présente une forme arquée.

8. Diffuseur à air selon l'une quelconque des revendications 1 à 7, dans lequel les surfaces (56) de l'élément de friction (50) et la surface de friction (38) du corps de friction (36) sont réalisées de manière non abrasive et/ou optimisée sur le plan tribologique.

9. Diffuseur à air selon l'une quelconque des revendications 1 à 8, dans lequel la surface de friction (38) ou l'au moins une lamelle (30) présente un revêtement en polyoxyméthylène, polypropylène, polycétone ou poly(p-phénylènetéréphthalamide) ou se compose de polyoxyméthylène, polypropylène, polycétone ou poly(p-phénylènetéréphthalamide).

10. Diffuseur à air selon l'une quelconque des revendications 1 à 9, dans lequel l'élément de friction (50) présente sur au moins une surface (56) un revêtement en polyoxyméthylène, polypropylène, polycétone ou poly(p-phénylènetéréphthalamide) ou en acier ou se compose de polyoxyméthylène, polypropylène, polycétone ou poly(p-phénylènetéréphthalamide) ou d'acier.
